Europäisches Patentamt

European Patent Office

Office européen des brevets

(11) Veröffentlichungsnummer: **0 182 743**
**B1**

(12) EUROPÄISCHE PATENTSCHRIFT

(45) Veröffentlichungstag der Patentschrift: **12.12.90**

(21) Anmeldenummer: **85810519.0**

(22) Anmeldetag: **06.11.85**

(51) Int. Cl.⁵: **C 09 B 69/04,** C 09 B 67/26, C 09 B 56/04, D 21 H 21/28

(54) **Konzentrierte lagerstabile wässrige Lösungen gelber Stilbenazo(xy)-farbstoffe.**

(30) Priorität: **12.11.84 CH 5406/84**

(43) Veröffentlichungstag der Anmeldung:
**28.05.86 Patentblatt 86/22**

(45) Bekanntmachung des Hinweises auf die
Patenterteilung:
**12.12.90 Patentblatt 90/50**

(84) Benannte Vertragsstaaten:
**AT BE CH DE FR GB IT LI NL SE**

(56) Entgegenhaltungen:
EP-A-0 021 619
EP-A-0 053 220

CHEMICAL ABSTRACTS, Band 96, Nr. 6, Februar
1982, Seite 83, Zusammenfassung Nr. 36800g,
Columbus, Ohio, US; JP-A-81 127 665
(SUMITOMO CHEMICAL CO., LTD.) 06.10.1981

Die Akte enthält technische Angaben, die nach
dem Eingang der Anmeldung eingereicht
wurden und die nicht in dieser Patentschrift
enthalten sind.

(73) Patentinhaber: **CIBA-GEIGY AG**
**Klybeckstrasse 141**
**CH-4002 Basel (CH)**

(72) Erfinder: **Tzikas, Athanassios, Dr.**
**Muttenzerstrasse 78**
**CH-4133 Pratteln (CH)**
Erfinder: **Herzig, Paul**
**Markgräflerstrasse 20**
**CH-4057 Basel (CH)**
Erfinder: **Markert, Jürgen, Dr.**
**Im Guntengarten 32**
**CH-4107 Ettingen (CH)**

**Beschreibung**

Die vorliegende Erfindung betrifft ein Verfahren zur Herstellung konzentrierter lagerstabiler wässriger Farbstofflösungen enthaltend ein Gemisch gelber Stilbenazo(xy)farbstoffe, die nach diesem Verfahren erhaltenen Farbstofflösungen sowie deren Verwendung.

Die Selbstkondensation von 4-Nitrotoluol-2-sulfonsäure, die in einfacher Weise zu gelben Stilbenazo(xy)farbstoffen führt, ist seit langem bekannt (technische Herstellungsmethoden sind angegeben im BIOS Report 1548). Bei den so hergestellten Farbstoffen handelt es sich um substantive Farbstoffe, die vor allem zum Färben von Papier verwendet werden. Der wichtigste dieser Farbstoffe ist als C.I. Direct Yellow 11 bekannt.

Bei Durchführung der Kondensation von 4-Nitrotoluol-2-sulfon säure in Gegenwart von Natronlauge werden bekanntlich in Wasser ungenügend lösliche Natriumsalze der Stilbenazo(xy)farbstoffe erhalten. Konzentrierte wässrige Lösungen, die man z.B. zum Massefärben von Papier mit Vorteil einsetzt, können aus diesen Salzen nicht hergestellt werden, da deren Löslichkeit in Wasser nur ca. 1 g/100 ml beträgt.

Es hat daher nicht an Versuchen gefehlt, die Kondensationsreaktion so zu gestalten, dass der Farbstoff direkt in Form einer konzentrierten wässrigen Lösung anfällt.

In der DE-A- 16 44 308 ist ein Herstellungsverfahren beschrieben, nach dem die Kondensation ausgehend vom Lithiumsalz der 4-Nitrotoluol-2-sulfonsäure in Gegenwart von Lithiumhydroxid als ßase durchgeführt wird, wobei der Farbstoff in Form einer hochkonzentrierten, sehr gut wasserlöslichen Farbstoffpaste erhalten wird. Die so hergestellten Lithiumsalze der Stilbenazo(xy)farbstoffe sind nicht nur gut wasserlöslich, sondern zeichnen sich gegenüber den Natriumsalzen auch durch höhere Substantivität aus. Nachteil der Lithiumsalze ist jedoch, dass diese keine stabilen Farbstofflösungen ergeben; vielmehr neigen die konzentrierten Lösungen bei der Lagerung zur Gelbildung, Kristallisation oder Ausflockung, was deren Applikation erschwert oder gar verunmöglicht.

In der DE-A- 28 20 487 wird vorgeschlagen, die basenkatalysierte Selbstkondensation von 4-Nitrotoluol-2-sulfonsäure in Gegenwart von Reaktionsprodukten aus Ammoniak und Aethylenoxid und Natrium- oder Lithiumhydroxid, bzw. in der DE-OS 30 46 450 in Gegenwart eines primären, sekundären oder tertiären Amins und Lithiumhydroxid durchzuführen. Die Sulfogruppen der auf diese Weise hergestellten Stilbenazo(xy)farbstoffe liegen zumindest teilweise als Alkalisalze vor.

Die Kondensation von 4-Nitrotoluol-2-sulfonsäure s in Gegenwart von Natriumhydroxid und Alkanolaminen in wässrig/alkoholischem Medium, ist in der DE-A- 31 10 261 beschrieben. Dank dem organischen Lösungsmittel werden hierbei lagerstabile Farbstofflösungen erhalten. Nachteilig ist jedoch, dass diese Präparate einen relativ hohen Anteil an organischen Lösungsmitteln, wie Glykoläthern, enthalten, was nach der Papierfärbung zu einer starken Abwasserbelastung führt.

Die EP-A- 122 224 betrifft ein Verfahren zur Herstellung konzentrierter wässriger Lösungen von Stilbenazo(xy)farbstoffen, in dem man die basenkatalysierte Kondensation von 4-Nitrotoluol-2-sulfonsäure in Gegenwart einer Mischung aus einem $C_2$-$C_4$-Monoalkanolamin und einem Di- oder Trialkanolamin durchführt und die anorganischen Salze aus der Farbstofflösung entfernt. Bei diesem Verfahren müssen also die anorganischen Salze, z.B. durch ein Membrantrennverfahren, entfernt werden.

Eine Methode zur Herstellung elektrolytarmer Farbstoffe wird in der EP-A- 53 220 angegeben, wonach der Farbstoff zunächst in ein lipophiles Aminsalz zu überführen ist, um ihn auf diese Weise von der salzhaltigen Syntheselösung abzutrennen. Danach wird durch Zusatz von Diäthanolamin das Farbstoff-Diäthanolammoniumsalz hergestellt und das vorher verwendete lipophile Amin wieder zurückgewonnen. Auf Stilbenazo(xy)farbstoffe angewandt hat dieses Verfahren den Nachteil, dass man keine gute Phasentrennung erhält, wodurch Verluste an Farbstoff entstehen und ausserdem das Waschen der organischen Phase erschwert ist.

Schliesslich ist aus der EP-A- 21 619 ein Verfahren zur Herstellung von konzentrierten wässrigen Lösungen von sulfogruppenhaltigen Farbstoffen bekannt, in dem der jeweilige Farbstoff in ein Aminsalz umgewandelt wird, das mit einem organischen Lösungsmittel extrahiert wird. Anschliessend wird mit einer Base, z.B. Ammoniak, Lithiumhydroxid oder einem wasserlöslichen Amin, umgesalzt und der Farbstoff in die wässrige Phase rückextrahiert. Als organisches Lösungsmittel wird insbesondere Toluol oder Mischungen von Toluol und Butylacetat verwendet. Auch bei diesem Verfahren erhält man keine optimale Phasentrennung und eine nicht vollständige Lösung des Aminsalzes in der organischen Phase. Dadurch entstehen Farbstoffverluste und verfahrenstechnische Probleme.

Aufgabe der vorliegenden Erfindung war es, ein Verfahren zu entwickeln, das einfach in der Durchführung ist und wonach konzentrierte wässrige Lösungen von Stilbenazo(xy)farbstoffen erhalten werden, die lagerstabil und möglichst frei von organischen Lösungsmitteln und anorganischen Salzen sind.

Gefunden wurde, dass man derartige Farbstofflösungen erhält wenn man den durch Selbstkondensation von 4-Nitrotoluol-2-sulfonsäure in Alkalilauge erhaltenen Farbstoff in einem 2-Phasensystem aus Nitrobenzol/Wasser durch zweimaliges Umsalzen über ein lipophiles Ammoniumsalz in ein gut wasserlösliches Alkanolammoniumsalz überführt.

Gegenstand der Erfindung ist somit ein Verfahren zur Herstellung konzentrierter lagerstabiler wässriger Lösungen gelber Stilbenazo(xy)farbstoffe, die durch Selbstkondensation von 4-Nitrotoluol-2-sulfonsäure in Alkalilauge erhalten werden, durch Umwandlung des schwerlöslichen Alkalimetall-Farbstoffsalzes durch zweifachen Kationenaustausch über ein lipophiles Ammoniumsalz in ein wasserlösliches Alkanolammoniumsalz, das dadurch gekennzeichnet ist, dass man den zweifachen Ionenaustausch in einem 2-Phasensystem aus Nitrobenzol/Wasser durchführt und zur ersten Umsalzung des Farbstoffes ein Di- oder Trialkylamin mit insgesamt 12 bis 40 Kohlenstoffatomen und zur zweiten Umsalzung ein $C_2$-$C_4$-Mono-, Di- oder Trialkanolamin verwendet.

Das erfindungsgemässe Verfahren läuft also beispielsweise derart ab, dass man den durch Selbstkondensation von 4-Nitrotoluol-2-sulfonsäure in Alkalilauge erhaltenen Farbstoff als wässrige Suspension bzw. Lösung, die vorzugsweise sauer ist (man kann dabei direkt von der vorzugsweise angesäuerten Reaktionsmischung, vom feuchten Filterkuchen oder vom bereits getrockneten Farbstoff ausgehen, wobei letzterer wieder mit Wasser versetzt werden muss), mit dem Di- oder Trialkylamin und Nitrobenzol behandelt, die das Aminsalz des Farbstoffes enthaltende organische phase abtrennt, letztere mit dem Alkanolamin und Wasser behandelt und die wässrige, nunmehr den Farbstoff enthaltende Phase abtrennt. Gegebenenfalls können Reste des Amins und Nitrobenzols entfernt werden, z.B. durch Wasserdampfdestillation.

Durch die Verwendung von Nitrobenzol als organische Phase erhält man sowohl bei der Bildung des lipophilen Ammoniumsalzes, als auch des Alkanolammoniumsalzes rasch eine gute Phasentrennung zwischen wässriger und organischer Phase. Wegen der günstigen Dichteunterschiede lässt sich die Nitrobenzolphase auch leicht salzfrei waschen. Eine praktisch salzfreie Farbstofflösung schafft wiederum beste Voraussetzungen dafür, eine hochkonzentrierte Flüssighandelsform einzustellen. Denn bereits geringe Salzmengen verringern deutlich die Löslichkeit der Stilbenazo(xy)farbstoffe.

Bei den zur ersten Umsalzung verwendeten Di- und Trialkylaminen, deren Alkylreste insgesamt 12 bis 40 Kohlenstoffatome aufweisen, handelt es sich beispielsweise um die folgenden Verbindungen: Di-decylamin, Dioctadecylamin, Di-2-äthylhexylamin, ferner Tributylamin, Trihexylamin, Dimethyloctadecylamin, Methyldi-decylamin, Tridodecylamin, Methyldioctylamin, Tri-n-octylamin oder Tri-2-äthylhexylamin. Neben den reinen Verbindungen kommen auch Amingemische und hier insbesondere die sogenannten Fettamine in Betracht, z.B. Kokosfettamin oder Talgfettamin. Bevorzugt sind Trialkylamine, und zwar solche mit insgesamt 12 bis 25 Kohlenstoffatomen, und hier vor allem das Tributylamin und das Tri-n-octylamin.

Nach der ersten Umsalzung befindet sich der Farbstoff als lipophiles Di- oder Trialkylammoniumsalz in der Nitrobenzolphase. Die salzhaltige Wasserphase wird abgetrennt und der Farbstoff durch einen nochmaligen Kationenaustausch in ein gut wasserlösliches Salz, und zwar ein $C_2$-$C_4$-Mono-, Di- oder Trialkanolammoniumsalz überführt. Als $C_2$-$C_4$-Monoalkanolamine kommen hierzu beispielsweise in Betracht: Aethanolamin, n-Propanolamin, 1-Amino-2-propanolamin, n-Butanolamin, 2-Amino-1-butanol oder 2-Hydroxyäthoxyäthylamin. Als $C_2$-$C_4$-Dialkanolamine kommen Diäthanolamin oder Diisopropanolamin in Frage, als $C_2$-$C_4$-Trialkanolamine das Triäthanolamin bzw. Triisopropanolamin. Neben den reinen Verbindungen kann man auch hier Alkanolamingemische verwenden, zumal sich auf diese Weise der Farbton der Stilbenazo(xy)farbstoffe in gewissen Grenzen — von einem rötlichen gelb bis zu einem grünlichen gelb — variieren lässt. Bevorzugt verwendet man zur zweiten Umsalzung ein $C_2$-$C_4$-Dialkanolamin, insbesondere das Diäthanolamin.

Das erfindungsgemässe Verfahren, einschliesslich der Herstellung des schwerlöslichen Alkalimetall-Farbstoffsalzes, kann im einzelnen beispielsweise wie folgt durchgeführt werden: 4-Nitrotoluol-2-sulfonsäure wird in Alkalilauge, z.B. Kalilauge, vorzugsweise Natronlauge, eingetragen. Die Menge an Alkalimetallhydroxid kann in weiten Grenzen variieren, wobei im allgemeinen ein 2- bis 4-molarer Ueberschuss, bezogen auf 4-Nitrotoluol-2-sulfonsäure, eingesetzt wird, da neben der Ausgangsverbindung auch die der rohen Sulfonsäure anhaftenden Schwefelsäurereste neutralisiert werden müssen. Durchgeführt wird die Kondensation z.B. bei einem pH von ca. 11 bis 13 und einer Temperatur von 60 bis 80°C. Ist die Selbstkondensation der 4-Nitrotoluol-2-sulfonsäure genügend weit fortgeschritten, was nach einer Reaktionszeit von ca. 5 bis 8 Stunden der Fall ist, wird das Reaktionsgemisch zunächst durch Zugabe von Wasser verdünnt und dann angesäuert, z.B. mittels Schwefelsäure. Anschliessend versetzt man die saure Farbstofflösung mit Nitrobenzol und dem Di- oder Trialkylamin, z.B. Tributyl- oder Trioctylamin, und durchmischt das sich bildende 2-Phasensystem ca. 15 Minuten bis 1 Stunde bei einer Temperatur von 60 bis 80°C. Die Menge an Amin ist so zu bemessen, dass der Stilbenazo(xy)farbstoff vollständig in das entsprechende Ammoniumsalz überführt wird. Vorteilhaft verwendet man eine, bezogen auf die Sulfogruppen des Farbstoffs, äquimolare Menge plus einen geringen Ueberschuss, der bis zu 10% der äquimolaren Menge betragen kann. Das Nitrobenzol wird in einer Menge eingesetzt, dass sich nach der Durchmischung die beiden Phasen möglichst rasch und deutlich voneinander trennen. Es erweist sich als zweckmässig, auf 10 Teile Wasser 2 bis 5 Teile Nitrobenzol zu verwenden. Nachdem der Farbstoff vollständig in das entsprechende Ammoniumsalz überführt ist, wird die Nitrobenzolphase abgetrennt und vorteilhaft ein- oder mehrmals mit Wasser gewaschen. Anorganische Salze lassen sich so leicht entfernen. Anschliessend wird die farbstoffhaltige Nitrobenzolphase mit Wasser und dem Alkanolamin, z.B. Diäthanolamin, versetzt und ca. 1 bis 3 Stunden bei einer Temperatur von 60 bis 80°C durchmischt. Dabei bildet sich aus dem lipophilen Ammoniumsalz des Farbstoffs das hydrophile Aethanolammonium-, z.B. Diäthanolammoniumsalz, und der Farbstoff wandert aus der Nitrobenzol- in die Wasserphase. Das Aethanolamin verwendet man ebenfalls zweckmässigerweise in äquimolarer Menge mit geringem Ueberschuss (bis zu 10%). Auch bei diesem zweiten Kationenaustausch bekommt man eine gute Phasentrennung zwischen wässriger und organischer Phase und die farbstoffhaltige wässrige Phase lässt sich problemlos abtrennen. Reste an Amin und Nitrobenzol kann man aus der wässrigen Farbstofflösung leicht mit Hilfe einer Wasserdampfdestillation entfernen.

Abschliessend kann die Farbstofflösung, falls erforderlich, mittels Klärfiltration von Verunreinigungen befreit und durch Aufkonzentrieren, z.B. über ein Membrantrennverfahren oder Verdünnen, auf die handelsübliche Farbstärke eingestellt werden. Man erhält so eine gebrauchsfertige konzentrierte Farbstofflösung, die auch bei längerer Lagerung einwandfrei haltbar ist und nicht zum Verdicken neigt.

Die aminhaltige Nitrobenzolphase kann ohne irgendwelche Reinigungsoperationen, eventuell nach Zugabe der Aminmenge, die in der Wasserphase verloren gegangen ist, direkt für einen neuen Ansatz verwendet werden. Selbst bei mehrmaliger Wiederverwendung der Amin/Nitrobenzol-Mischung wird ein Farbstoffpräparat gleichbleibender Qualität erhalten.

Die nach dem erfindungsgemässen Verfahren hergestellten Farbstofflösungen können in geringen Mengen noch weitere Hilfsmittel, wie Formamid, Dimethylformamid, Glykol, Diäthylen- und Triäthylenglykol sowie deren Mono- und Dialkyläther, ferner Polyalkylenglykole mit einem Molgewicht von 400 bis 4'000 oder auch Benzylalkohol oder Harnstoff enthalten. Die Hilfsmittel werden zweckmässigerweise der neutralen und entsalzten Farbstofflösung zugesetzt.

Die Farbstofflösungen gemäss vorliegender Erfindung eignen sich vorzugsweise für die Herstellung von in der Masse gefärbtem, geleimtem und ungeleimtem Papier. Sie können jedoch ebenfalls zum Färben von Papier nach dem Tauchverfahren und in der Leimpresse Verwendung finden. Die Färbungen zeichnen sich durch gute Abwasserechtheit aus, die Farbstoffe färben die Abwässer bei der Papierherstellung nur wenig an; sie melieren nicht und färben Papier nicht zweiseitig. Die erhaltenen Papierfärbungen zeigen gute Lichtechtheit — bei längerem Belichten ändert sich die Nuance Ton in Ton — und insbesondere auch gute Nassechtheiten.

Die nachfolgenden Beispiele dienen der Erläuterung der Erfindung; Teile bedeuten Gewichtsteile und Prozente Gewichtsprozente.

### Beispiel 1

In einem Planschliffkolben werden 800 Teile Wasser vorgelegt und 120 Teile Natriumhydroxid in fester Form so eingetragen, dass die Temperatur nicht über 60°C steigt. In die 55 bis 60°C warme Natronlauge werden nun innerhalb von ca. 5 Minuten 217 Teile 4-Nitrotoluol-2-sulfonsäure eingetragen. Anschliessend erhöht man innerhalb von einer Stunde die Temperatur auf 74°C und tropft innert einer weiteren Stunde 100 Teile Wasser zu. Der pH-Wert des Reaktionsgemisches liegt bei über 12. Man rührt noch weitere 4 Stunden bei 70 bis 75°C und gibt dann 650 Teile Wasser und innerhalb von 20 bis 30 Minuten 150 Teile konz. Schwefelsäure zu. Anschliessend wird das Reaktionsgemisch, dessen pH am Ende der Schwefelsäurezugabe unter 4 gesunken ist, noch weitere 30 Minuten in der Wärme gerührt. Danach gibt man eine Mischung aus 467 Teilen Nitrobenzol und 200 Teilen Tributylamin zu und rührt 30 Minuten lang bei 70°C.

Nach Abstellen des Rührers trennt sich sofort die Nitrobenzolphase ab. Die schwerere Nitrobenzolphase, die das Tributylammoniumsalz des Farbstoffgemisches enthält, wird abgelassen, anschliessend mit einer Mischung aus 350 Teilen Wasser und 108 Teilen Diäthanolamin versetzt und ca. 2 Stunden bei etwa 70°C gerührt. Am Ende der zweiten Umsalzung befindet sich der Farbstoff in der wässrigen Phase und liegt hier als Diäthanolammoniumsalz vor. Die wässrige Phase wird abgetrennt und mittels Wasserdampfdestillation von Tributylamin- und Nitrobenzolresten befreit. Nach dem Abkühlen wird die Farbstofflösung durch einen Faltenfilter klärfiltriert. Man erhält 820 Teile einer konzentrierten, lagerstabilen, gebrauchsfertigen Farbstofflösung.

### Beispiel 2

Wiederholt man Beispiel 1, setzt jedoch an Stelle von Tributylamin die äquivalente Menge Tri-n-octylamin ein, erhält man ebenfalls eine konzentrierte, lagerstabile Lösung des eingesetzten Farbstoffes.

### Beispiel 3

10 g gebleichte Cellulose werden in 500 ml Wasser von pH 7 eingetragen und 30 Minuten gequollen. Danach rührt man noch weitere 30 Minuten und setzt 2,5 g der gemäss Beispiel 1 oder 2 erhaltenen Farbstofflösung zu. Man rührt zur gleichmässigen Durchmischung 15 Minuten, stellt mit Wasser von pH 7 auf ein Gesamtvolumen von 700 ml und führt mit dieser Flotte die Blattbildung durch. Das erhaltene Papier besitzt eine intensive gelbe Nuance mit guten Nassechtheiten.

### Patentansprüche

1. Verfahren zur Herstellung konzentrierter lagerstabiler wässriger Lösungen gelber Stilbenazo(xy)farbstoffe, die durch Selbstkondensation von 4-Nitrotoluol-2-sulfonsäure in Alkalilauge erhalten werden, durch Umwandlung des schwerlöslichen Alkalimetall-Farbstoffsalzes durch zweifachen Kationenaustausch über ein lipophiles Ammoniumsalz in ein wasserlösliches Alkanolammoniumsalz, dadurch gekennzeichnet, dass man den zweifachen Ionenaustausch in einem 2-Phasensystem aus Nitrobenzol/Wasser durchführt und zur ersten Umsalzung des Farbstoffes ein Di- oder Trialkylamin mit insgesamt 12 bis 40 Kohlenstoffatomen und zur zweiten Umsalzung ein $C_2$-$C_4$-Mono-, Di- oder Trialkanolamin verwendet.

2. Verfahren gemäss Anspruch 1, dadurch gekennzeichnet, dass man zur ersten Umsalzung ein Trialkylamin mit insgesamt 12 bis 25 Kohlenstoffatomen verwendet.

3. Verfahren gemäss Anspruch 1, dadurch gekennzeichnet, dass man zur ersten Umsalzung Tributylamin oder Tri-n-octylamin verwendet.

4. Verfahren gemäss Anspruch 1, dadurch gekennzeichnet, dass man die zweite Umsalzung mit einem $C_2$-$C_4$-Dialkanolamin durchführt.

5. Verfahren gemäss Anspruch 1, dadurch gekennzeichnet, dass man die zweite Umsalzung mit Diäthanolamin durchführt.

6. Verfahren gemäss Anspruch 1, dadurch gekennzeichnet, dass das schwerlösliche Farbstoffsalz über das lipophile Tributylammoniumsalz in das gut wasserlösliche Diäthanolammoniumsalz überführt wird.

7. Verfahren gemäss Anspruch 1, dadurch gekennzeichnet, dass das schwerlösliche Farbstoffsalz über das lipophile Tri-n-octylammoniumsalz in das gut wasserlösliche Diäthanolammoniumsalz überführt wird.

8. Verfahren nach Anspruch 1, dadurch gekennzeichnet, dass man die erste Umsalzung direkt aus der aus dem Herstellungsverfahren des Farbstoffes resultierenden, gegebenenfalls angesäuerten Reaktionsmischung durchführt.

**Revendications**

1. Procédé pour préparer des solutions aqueuses concentrées, stables au stockage, de colorants jaunes stilbène-azo ou stilbène-azoxy, que l'on obtient par auto condensation de l'acide 4-nitrotoluène-2-sulfonique en solution alcaline, en transformant le sel difficilement soluble de métal alcalin du colorant, par un double échange de cations, en un sel hydrosoluble d'alcanolammonium, par l'intermédiaire d'un sel lipophile d'ammonium, le procédé étant caractérisé en ce que l'on effectue le double échange d'ions dans un système biphasique constitué de nitrobenzène et d'eau, et en ce que l'on utilise, pour la première transsalification du colorant, une dialkylamine ou trialkylamine comportant au total de 12 à 40 atomes de carbone, et pour la deuxième transsalification, une mono-alcanolamine, di-alcanolamine ou tri-alcanolamine dont les groupes alkyles comportent de 2 à 4 atomes de carbone.

2. Procédé conforme à la revendication 1, caractérisé en ce que l'on utilise, pour la première trans-salification, une tri-alkylamine comportant au total de 12 à 25 atomes de carbone.

3. Procédé conforme à la revendication 1, caractérisé en ce que l'on utilise, pour la première trans-salification, de la tri-butylamine ou de la tri-n-octylamine.

4. Procédé conforme à la revendication 1, caractérisé en ce que l'on réalise la deuxième trans-salification avec une di-(alcanol en $C_2$-$C_4$)-amine.

5. Procédé conforme à la revendication 1, caractérisé en ce que l'on réalise la deuxième trans-salification avec de la di-éthanolamine.

6. Procédé conforme à la revendication 1, caractérisé en ce que l'on transforme le sel difficilement soluble de colorant, par l'intermédiaire du sel lipophile de tri-butylammonium, en le sel bien hydrosoluble de di-éthanolammonium.

7. Procédé conforme à la revendication 1, caractérisé en ce que l'on transforme le sel difficilement soluble de colorant, par l'intermédiaire du sel lipophile de tri-n-octylammonium, en le sel bien hydrosoluble de di-éthanolammonium.

8. Procédé conforme à la revendication 1, caractérisé en ce que l'on opère la première trans-salification directement sur le mélange réactionnel, éventuellement acidifié, résultant du procédé de préparation du colorant.

**Claims**

1. A process for the preparation of concentrated storage-stable agueous solutions of yellow stilbeneazo and stilbeneazoxy dyes which are obtained by self-condensation of 4-nitrotoluene-2-sulfonic acid in alkali metal hydroxide solution, by converting the sparingly soluble alkali metal salt of the dye into a water-soluble alkanolammonium salt by double cation exchange via a lipophilic ammonium salt, which process comprises carrying out the double ion exchange in a two-phase system of nitrobenzene/water and using, for the first ion exchange of the dye a di- or trialkylamine containing a total of 12 to 40 carbon atoms and, for the second ion exchange, a $C_2$-$C_4$-mono-, di- or trialkanolamine.

2. The process according to claim 1, wherein a trialkylamine containing a total of 12 to 25 carbon atoms is used for the first ion exchange reaction.

3. The process according to claim 1, wherein tributylamine or tri-n-octylamine is used for the first ion exchange reaction.

4. The process according to claim 1, wherein the second ion exchange reaction is carried out with a $C_2$-$C_4$dialkanolamine.

5. The process according to claim 1, wherein the second ion exchange reaction is carried out with a diethanolamine.

6. The process according to claim 1, wherein the sparingly soluble dye salt is converted into the readily water-soluble diethanolammionium salt via the lipophilic tributylammonium salt.

7. The process according to claim 1, wherein the sparingly soluble dye salt is converted into the readily water-soluble diethanolammonium salt via the lipophilic tri-n-octylammionium salt.

8. The process according to claim 1, wherein the first ion exchange reaction is carried out directly from the optionally acidified reaction mixture resulting from the synthesis of the dye.